# EUROPÄISCHE PATENTSCHRIFT

(11) **EP 0 586 852 B1**
(45) Veröffentlichungstag und Bekanntmachung des Hinweises auf die Patenterteilung: **29.03.2000**
(21) Anmeldenummer: 93111887.1
(22) Anmeldetag: 24.07.1993
(51) Int. Cl.: G06K 19/073, G07F 7/02

(54) **Mobiler Datenträger und Datenaustauschvorrichtung dafür**
Mobile data carrier and data exchange system
Porteur de données mobile et dispositif d'échange de données

(30) Priorität: 07.09.1992 DE 4229863
(43) Veröffentlichungstag der Anmeldung: 16.03.1994
(73) Patentinhaber: National Rejectors Inc. GmbH, 21614 Buxtehude (DE)
(72) Erfinder: Buschmann, Horst, D-21698 Harsefeld (DE); Niehusen, Karsten, D-21465 Reinbek (DE); Heuer, Burkhard, D-21709 Himmelpforten (DE); Niznik, Thomas, D-22589 Hamburg (DE)
(74) Vertreter: Graalfs, Edo, Dipl.-Ing. Patentanwälte Hauck, Graalfs, Wehnert, Döring, Siemons

(56) Entgegenhaltungen:
- EP-A- 0 423 035
- CH-A- 604 290
- FR-A- 2 589 268
- US-A- 3 610 889
- US-A- 3 935 933

## Beschreibung

Die Erfindung bezieht sich auf ein Verfahren zur Durchführung des Bezugs von Waren oder Dienstleistungen mit Hilfe von mobilen Datenträgern nach dem Oberbegriff des Patentanspruchs 1.

Datenträger für den bargeldlosen Zahlungsverkehr sind in vielfachen Ausführungsformen bekannt. Sie sind zumeist als Karte ausgeführt und enthalten einen Speicher, in den bestimmte Daten eingeschrieben werden. Im einfachen Fall enthalten derartige Datenträger einen Code, der den Karteninhaber berechtigt, von einem Konto Geld abzuheben bzw. abzubuchen. Dies ist etwa der Fall bei Scheck- oder Kreditkarten. In anderen Fällen enthält der Datenträger in seinem Speicher eine vorgegebene Anzahl von Werteinheiten, wobei jede Werteinheit eine bestimmte Ware oder Leistung auslöst, wenn der Datenträger mit einem Datenaustauschgerät in Verbindung gebracht wird. Bei Vorhandensein einer Werteinheit wird ein Freigabe- oder Auslösesignal erzeugt, damit die Ware oder die Leistung abgefordert werden kann. Gleichzeitig werden eine oder mehrere Werteinheiten gelöscht. Ist der Speicher leer, verliert der Datenträger seinen Wert. Er wird dann fortgeworfen, wie zum Beispiel bei den Telefonkarten. Alternativ kann er mit Hilfe eines Datenaustauschgeräts wieder neu geladen werden. Dies kann zum Beispiel mit Hilfe eines Automaten erfolgen, der zum Beispiel bei Einzahlung einer bestimmten Summe durch Einwurf von Münzen oder Eingabe von Scheinen den Datenträger entsprechend auflädt. Handelt es sich bei dem Datenträger um ein Mittel, das den Inhaber zu sogenannten Subventionsverkäufen oder freien Leistungen berechtigt, kann das erneute Beladen des Speichers auch ohne die Einzahlung von Geld oder die Abbuchung einer entsprechenden Summe vom Konto des Inhabers des Datenträgers vorgenommen werden.

Aus FR-A-2 589 268 ist ein mobiler Datenträger bekanntgeworden, insbesondere eine Datenkarte, der ein eine Mehrzahl von Bits aufweisendes Speicherfeld enthält, wobei die Bits mit Hilfe eines Datenaustauschgerätes ausgelesen, gelöscht und wieder neu gesetzt werden können. Ein Speicherfeld weist einen ersten Speicherbereich auf mit einer Mehrzahl von mindestens einen Bit enthaltenden Speicherstellen und einen mehrere Bits enthaltenden zweiten Speicherbereich. Aus CH-A-604 290 ist ein mobiler Datenträger in Form einer Wertkarte bekanntgeworden, auf dem Markierungen, welche Bits darstellen, ein vorbestimmtes Bezugsrecht bilden. Die Bezugsrechte sind in Gruppen aufgeteilt, wobei das Bezugsrecht jeder Gruppe nur in einem bestimmten Zeitintervall gültig ist. Aus US-A-3 935 933 ist auch bekannt, bei mobilen Datenträgern die Werteinheiten als Zähler vorzusehen. Sie werden bei jeder Transaktion entsprechend verringert.

Der Speicherplatz von Datenträgern ist naturgemäß begrenzt. Je größer die Anzahl gleichzeitig zur Verfügung zu stellender Daten ist, um so größer ist der Speicherbedarf bzw. um so schneller ist der Speicher erschöpft. Die Wiederbeladehäufigkeit ist ebenfalls begrenzt.

Der Erfindung liegt die Aufgabe zugrunde, ein Verfahren zur Durchführung des Bezugs von Waren oder Dienstleistungen mit Hilfe von mobilen Datenträgern anzugeben, bei dem der Datenträger mit relativ kleiner Speicherkapazität auskommt. Ferner soll für die Inanspruchnahme und Verwaltung der Daten des Datenträgers keine Verbindung von Datenaustauschgeräten bzw. mit einer zentralen Dateneinheit erforderlich sein.

Diese Aufgabe wird durch die Merkmale des Patentanspruchs 1 gelöst.

Bei der Erfindung weist der mobile Datenträger ein Speicherfeld mit einem eine erste Zeitspanne darstellenden ersten Speicherbereich auf mit einer Mehrzahl von Speicherstellen, wobei jede Speicherstelle mittels eines Datenaustauschgeräts mit einem Bit geladen wird und ein vorgegebenes Zeitintervall repräsentiert. Ferner ist ein mehrere Bits enthaltender zweiter Speicherbereich vorgesehen, der eine durch Anfang und Dauer vorgegebene zweite Zeitspanne repräsentiert, wobei die Dauer der zweiten Zeitspanne ein Vielfaches des vorgegebenen Zeitintervalls beträgt.

Das Zeitintervall kann von der Anwendung abhängig gemacht werden, zum Beispiel eine Stunde oder ein Tag sein. Es ist ein dritter als Zähler dienender Speicherbereich vorgesehen mit einer begrenzten Anzahl von Bits, der einer bestimmten Bit-Position innerhalb aller Speicherstellen zugeordnet ist. Weist der Zähler bzw. der dritte Speicherbereich zum Beispiel vier Bits auf, sind bis zu 15 Abrufe einer Werteinheit pro Zeitintervall, zum Beispiel pro Tag, möglich. Da der Zähler für alle Speicherstellen des ersten Speicherbereichs nur einmal erforderlich wird, kann auf diese Weise die Anzahl der für die Gesamtinformation erforderlichen Bits reduziert werden. Mit der Inanspruchnahme eines Bits einer bestimmten Bit-Position und damit auch gleichzeitig seinem Löschen wird der Zähler auf einen vorgegebenen Höchstwert gestellt, wobei dieser Höchstwert im Datenaustauschgerät vorgegeben werden kann. Jede weitere Inanspruchnahme derselben Leistung führt zu einem Dekrementieren des Zählers bis auf Null, so daß im jeweiligen Zeitintervall keine weitere Leistung mehr abgerufen werden kann.

Der Inhalt des zweiten Speicherbereichs definiert eine Zeitspanne, deren Dauer ein Vielfaches des Zeitintervalls beträgt. Die Zeitspanne kann zum Beispiel einen Monat befragen und ist durch Anfang und Dauer festgelegt. Durch einen zusätzlichen Speicherbereich bzw. durch den Speicherbereich selbst kann außerdem festgelegt werden, für welches Jahr die Zeitspanne gültig ist.

Die Position einer Speicherstelle innerhalb des ersten Speicherbereichs entspricht der Position des Zeitintervalls in der Zeitspanne, zum Beispiel einem bestimmten Tag in einem bestimmten Monat.

Wie bereits erwähnt, ist es möglich, die Höchstzahl, auf die ein Zähler hochgestellt wird, im Datenaustauschgerät zu speichern. Erfindungsgemäß wird im dritten Speicherbereich die definierte Höchstzahl gespeichert.

Die Reihenfolge der Bits im dritten Speicherbereich bzw. der unterschiedliche Wert kann vorgegeben oder gleich sein. Dadurch ist es möglich, die Reihenfolge, in der Waren oder Leistungen abgerufen oder konsumiert werden können, vorzugeben. So kann zum Beispiel eine ein alkoholisches Getränk repräsentierende Werteinheit nicht abgerufen werden, bevor nicht die Werteinheit für ein Essen in Anspruch genommen wurde.

Nach einer weiteren Ausgestaltung der Erfindung speichert das Datenaustauschgerät in einem vierten Speicherbereich einen Lösch- oder Aktualisierungscode für den ersten und zweiten Speicherbereich. Damit ist ein Zugriffsschutz für den Datenträger geschaffen. Er besteht einerseits darin, daß das Aktualisieren des ersten und zweiten Speicherbereichs erst nach erfolgreicher Präsentation eines Paßwortes möglich ist. Andererseits ist das Löschen des ersten und zweiten Speicherbereichs erst nach erfolgreicher Präsentation eines unter Umständen anderen Paßwortes möglich.

Schließlich kann ein fünfter Speicherbereich vorgesehen sein zur Speicherung eines Guthabens, aus dem mit Hilfe des Datenaustauschgerätes der Gegenwert für eine Dienstleistung oder Ware abgebucht werden kann, wenn eine Werteinheit allein nicht für die Bezahlung ausreicht oder keine Werteinheit mehr zur Verfügung steht.

Schließlich ist auch möglich, einen sechsten Speicherbereich vorzusehen, der einen Sperrvermerk speichert. Dadurch wird die Möglichkeit geschaffen, den Inhaber dieser Karte von bestimmten Leistungen, zum Beispiel Subventionsverkäufen, auszunehmen. Wenn eine einheitliche Zahl der Subventionsverkäufe für alle Eigentümer der Datenträger gewünscht ist, kann die vordefinierte Höchstzahl von abrufbaren Werteinheiten durch das Datenaustauschgerät begrenzt werden. Dies hat den Vorteil, daß bei einer Veränderung der Anzahl der abzurufenden Werteinheiten nur die Austauschgeräte neu programmiert werden müssen, während die Datenträger unverändert bleiben.

Voraussetzung für die Inanspruchnahme von Dienstleistungen oder Waren mit Hilfe des erfindungsgemäßen Verfahrens ist, daß der Datenträger mit einem Datenaustauschgerät, zum Beispiel Buchungsgerät, in Verbindung gebracht wird. Eine ständige oder vorübergehende Verbindung zwischen den Buchungsgeräten untereinander oder mit einer Zentrale ist nicht erforderlich. Das Datenaustauschgerät erfordert mindestens eine Leseeinheit und eine Löscheinheit. Mit Hilfe der Leseeinheit, die zeitabhängig gesteuert wird, kann das jeweils in Frage kommende Zeitintervall innerhalb der zutreffenden Zeitspanne abgefragt werden, daraufhin, ob eine oder mehrere Werteinheiten zwecks Abrufens einer Ware oder einer Leistung zur Verfügung steht. Da die Abrufmöglichkeiten begrenzt werden, ist ferner eine Löscheinheit notwendig, welche entsprechend der abgerufenen Leistung die betreffende Werteinheit im ersten Speicherbereich löscht. Ergibt sich beim Vergleich, zum Beispiel beim Vergleich des zweiten Speicherbereichs mit der aktuellen Zeitspanne keine Übereinstimmung, kann ein Auslösesignal zum Auslesen des ersten Speicherbereichs bzw. zur Freigabe einer Dienstleistung oder einer Ware nicht erzeugt werden. Soll der Datenträger für die aktuelle Zeitspanne zugelassen werden, ist daher erforderlich, im zweiten Speicherbereich die zutreffende Zeitspanne einzutragen.

Das Datenaustauschgerät akzeptiert mithin nur Datenträger, welche als zum System gehörend anerkannt werden und kennt das aktuelle Datum und die Zeit. Es ist ferner auf bestimmte Werte für die Werteinheiten, die Zeitintervalle und die Zeitspanne einzustellen.

Darüber hinaus ermöglicht das Austauschgerät, den Speicherinhalt zu verändern, beispielsweise den Inhalt des zweiten Speicherbereichs, jedoch auch den des ersten Speicherbereichs. Das Datenaustauschgerät kann anhand der ausgelesenen Daten ferner prüfen, ob die Berechtigung zur Inanspruchnahme von Dienstleistungen oder Waren vorliegt. Dazu gehört, daß die auf dem Datenträger gespeicherte Zeitspanne die aktuelle Zeit einschließt, d. h. daß die Zeitspanne nicht überschritten ist. Wie schon erwähnt, kann in Abhängigkeit von der durchgeführten Datenaustauschaktion und ggf. eine Aktion des Benutzers, zum Beispiel Betätigen einer Wahltaste, ein Signal zur Inanspruchnahme von Dienstleistungen oder Waren erzeugt werden.

Im einzelnen prüft, wie ebenfalls schon erwähnt, das Austauschgerät, ob die aktuelle Zeitspanne des Datenträgers nicht überschritten ist. Ist dies nicht der Fall, wird geprüft, ob in der aktuell gültigen Speicherstelle noch ein Bit für die Inanspruchnahme der gewählten Leistung oder Ware verfügbar ist. Dies kann bei einem Datenträger, bei dem eine Werteinheit durch zum Beispiel eine 1 und sein Verbrauch durch eine 0 definiert ist, auf sehr einfache Weise erkannt werden. Es muß geprüft werden, ob der Zählerstand gleich oder größer als 1 ist. Bei einer verbrauchten Werteinheit im ersten Speicherbereich wird das zugehörige Bit verändert, zum Beispiel von 1 auf 0 (Löschen). Beim Zähler erfolgt eine Dekrementierung. Mit Hilfe des Datenaustauschgeräts kann zusätzlich von einem auf dem Datenträger vorhandenen Guthaben der Gegenwert für die Dienstleistung oder Ware abgebucht werden, wenn eine Werteinheit allein nicht mehr für die Bezahlung ausreicht oder keine Werteinheit mehr zur Verfügung steht.

Das Datenaustauschgerät kann zusätzlich die Zeitspanne aktualisieren durch Veränderung des Speicherinhalts im zweiten Speicherbereich. Dazu gehört das Erkennen, daß die Zeitspanne überschritten ist. Ferner ist zu prüfen, ob ein Aktualisieren der Zeitspanne zulässig ist. Dazu können weitere, auf dem Datenträger gespeicherte Daten, wie zum Beispiel Gültigkeitsdatum oder Sperrvermerke herangezogen werden. Ein Zurücksetzen des ersten Speicherbereichs (Aktualisierung) sowie ggf. des dritten Speicherbereichs kann ebenfalls vom Datenaustauschgerät vorgenommen werden. Dabei ist es möglich, hierfür spezielle Datenaustauschgeräte zu verwenden, die nur von autorisierten Personen bedient werden. Hierzu werden alle Bits im ersten Speicherbereich zum Beispiel auf 1 und der Zähler auf einen bestimmten Höchstwert programmiert. Schließlich erfordert das Aktualisieren auch das Eintragen der aktuellen Zeitspanne in den ersten Speicherbereich auf dem Datenträger.

Wie bereits erwähnt, kann ein Zähler alternativ dazu verwendet werden, die Zahl der Inanspruchnahmen der Werteinheiten zu erfassen. Das Datenaustauschgerät ist dann entsprechend auszulegen. Bei Aktualisierung der veränderbaren Speicherbereiche kann zum Beispiel ein bestimmter Geldbetrag entrichtet werden, welcher von dem auf der Karte befindlichen Guthaben abgebucht werden kann. Alternativ kann der Betrag durch Barzahlung entrichtet oder durch Abbuchung von einem an anderer Stelle geführten Konto entrichtet werden.

Die auf dem Datenträger vorgenommenen Eintragungen können zur Kontrolle mit Hilfe des Datenaustauschgerätes ausgelesen werden. Dies kann zur Kontrolle dienen, ob eine Dienstleistung oder Ware zu Recht in Anspruch genommen wurde. Die ausgelesenen Daten können mit erläutertem Text versehen angezeigt oder ausgedruckt werden.

Das Datenaustauschgerät kann zusätzlich dazu verwendet werden, einen Quittungsbeleg für die Inanspruchnahme einer Dienstleistung oder einer Ware auszudrucken. Ferner kann es an ein EDV-System angeschlossen werden, um eine Weiterverarbeitung der Daten bei der Inanspruchnahme von Dienstleistung oder Waren vornehmen zu können.

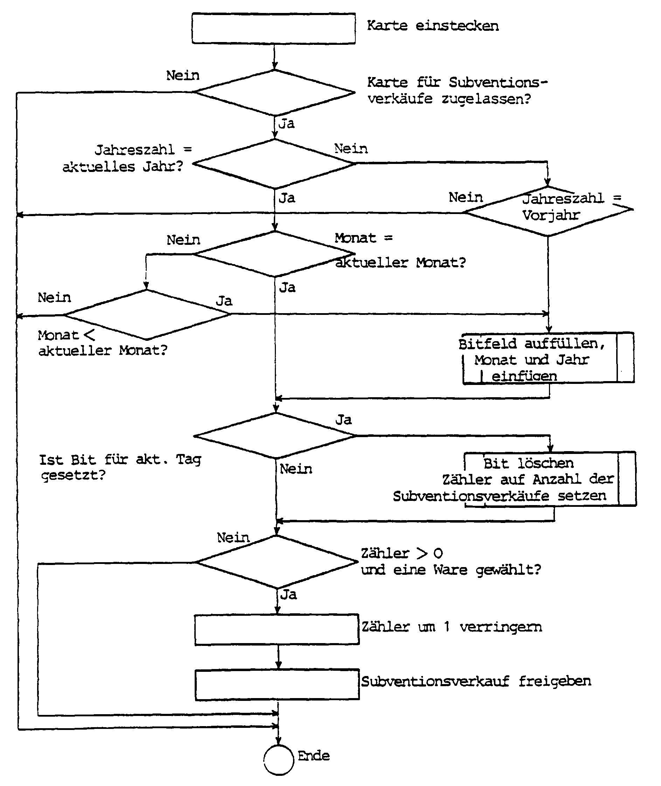

In einer einzigen Figur ist ein Flußdiagramm für ein Verfahren nach der Erfindung dargestellt zur Durchführung on Subventionsverkäufen mit einem Datenträger und einem Datenaustauschgerät.

Nachdem mit Hilfe eines Datenaustauschgeräts (zum Beispiel Buchungsgerät) ein Datenträger erkannt wurde, welcher für Subventionsverkäufe zugelassen ist, wird geprüft, ob der erste Speicherbereich neu geladen werden muß, weil die Zeitspanne überschritten wurde. Dabei wird folgende Prüfung durchgeführt:
Ist der Jahreseintrag auf dem Datenträger gültig? Gültig sind das aktuelle Jahr und das Vorjahr. Bei ungültiger Jahreszahl sind keine Subventionsverkäufe möglich
Ist der Monatseintrag auf dem Datenträger älter als der aktuelle Monat? Wenn ja, muß der erste Speicherbereich neu geladen und im zweiten Speicherbereich der aktuelle Monat und das Jahr eingetragen werden. Sollte der eingetragene Monat noch nicht erreicht sein, d. h. der aktuelle Monat ist älter als der eingetragene, so sind Subventionsverkäufe erst möglich, wenn der eingetragene Monat erreicht ist
Ist das Bit für das aktuelle Tagesdatum noch geladen? Wenn ja, wird der Zähler (dritter Speicherbereich)mit der Anzahl der vorbestimmten Höchstzahl geladen und das Bit gelöscht. Hier wird zunächst der auf der Karte eingetragene Wert überprüft Bei einem Wert größer als Null wird der Zähler mit dieser Anzahl geladen. Wenn die in der Karte eingetragene Anzahl 0 ist, wird der im Buchungsgerät bestimmte Höchstwert verwendet.

Nach dieser Überprüfung kann der Subventionsverkauf durchgeführt werden:
Wenn der Kunde ein Produkt ausgewählt hat, wird der Zähler auf dem Datenträger überprüft, ob er größer als 0 ist. Ist des der Fall, wird er um 1 verringert und ein Subventionsverkauf durchgeführt. Es kann ein Freiverkauf durchgeführt oder vorgegebener Wert gutgeschrieben werden, so daß hierfür gekauft werden kann. So ist es möglich, den Wert der Subvention zu begrenzen, so daß eine teurere Ware nur erworben werden kann, wenn ein ausreichendes Guthaben auf dem Datenträger verfügbar ist. Der über den definierten Wert hinausgehende Betrag wird dann von dem Guthaben abgebucht. Ist keine Werteinheit mehr vorhanden (Zähler gleich Null), wird der volle Betrag vom Guthaben abgebucht.

## Patentansprüche

1. Verfahren zur Durchführung des Bezugs von Waren oder Dienstleistungen mit Hilfe eines mobilen Datenträgers, auf welchem Gruppen von Bezugsrechte repräsentierenden Werteinheiten in Form von Bits in einem Speicherfeld mittels eines Datenaustauschgeräts gespeichert und ausgelesen werden, wobei die Werteinheiten jeder Gruppe in einem bestimmten Zeitintervall gültig sind, dadurch gekennzeichnet, daß von dem Datenaustauschgerät in einem eine erste Zeitspanne repräsentierenden ersten Speicherbereich des Datenträgers eine Reihe von Speicherstellen, die jeweils ein Zeitintervall innerhalb der ersten Zeitspanne repräsentieren, wahlweise mit einem Bit geladen oder nicht geladen werden,
von dem Datenaustauschgerät in einem zweiten Speicherbereich des Datenträgers Anfangszeitpunkt und Dauer einer absolut bestimmbaren zweiten Zeitspanne gespeichert werden, wobei der Anfangszeitpunkt der zweiten Zeitspanne zeitlich den Beginn der Abrufbarkeit der ersten Speicherstelle des ersten Speicherbereichs definiert,
und von dem Datenaustauschgerät in einem dritten als Zähler dienenden Speicherbereich des Datenträgers die Anzahl von Werteinheiten gespeichert werden, die je Zeitintervall abrufbar sind, wobei der Zähler mit der Anzahl der Werteinheiten geladen wird, die durch ein Bit im ersten Speicherbereich repräsentiert werden und das Bit in der betreffenden Speicherstelle im ersten Speicherbereich gelöscht wird, wenn es vorher als gespeichert ermittelt worden ist, und der Zähler bei jeder folgenden Transkation gleicher Art dekrementier wird, wenn das Bit in der betreffenden Speicherstelle des ersten Speicherbereichs als gelöscht ermittelt wird und wobei das Datenaustauschgerät ein Freigabesignal zum Lesen einer vorgegebenen Speicherstelle im ersten Speicherbereich erzeugt, wenn ein Vergleich der zweiten Zeitspanne mit einer aktuellen Zeitspanne eine Übereinstimmung ergibt.

2. Verfahren nach Anspruch 1, dadurch gekennzeichnet, daß die räumliche Position einer Speicherstelle im ersten Speicherbereich der zeitlichen Position eines Zeitintervalls in der ersten Zeitspanne entspricht.

3. Verfahren nach Anspruch 1 oder 2, dadurch gekennzeichnet, daß das Datenaustauschgerät in einem vierten Speicherbereich des Datenträgers einen Lösch- und Aktualisierungscode für den ersten und zweiten Speicherbereich speichert.

4. Verfahren nach einem der Ansprüche 1 bis 3, dadurch gekennzeichnet, daß das Datenaustauschgerät in einem fünften Speicherbereich des Datenträgers ein Guthaben speichert.

## Claims

1. Method for purchasing products and services using a mobile data carrier comprising a memory field having groups of value units representing options in the form of bits which can be stored and read by means of a data exchange device, the value units of each group being valuable in a predetermined time interval, characterized in that a number of memory locations is selectively loaded or not loaded with a bit by means of the data exchange device, wherein the memory locations are in a first memory region which represents a time interval within the first time period, and each of the memory locations represents a time interval within the first time period
beginning and length of an absolutely determinable second time period are stored in a second memory region of the data carrier by means of the data exchange device, wherein the time of beginning of the second time period defines the time of beginning from which on the first memory location of the first memory region may be read,
and the number of value units which may be loaded in each time interval is stored in a third memory region acting as a counter by means of the data exchange device, wherein the counter is loaded with the number of value units which are represented by a bit in the first memory region, and wherein the bit in the corresponding memory location of the first memory region is cleared in case the bit was detected as stored before, and the counter is decremented at each following transaction of the same kind in case the bit in the corresponding memory location of the first memory region is detected as cleared, and wherein the data exchange device compares the second time period with a present time period to generate in case of conformity a release signal for reading a predetermined memory location in the first memory region.

2. The method of claim 1, characterized in that the spatial position of a memory location in the first memory region corresponds to the temporal position of a time interval in the first time period.

3. The method of claim 1 or 2, characterized in that the data exchange device stores a clearing code and an updating code for the first and second memory region in a fourth memory region by means of a data exchange device.

4. Method according to one of the claims 1 to 3, characterized in that the data exchange device stores in fifth memory region of the data carrier a credit.

## Revendications

1. Procédé pour effectuer l'achat de produits ou de services à l'aide d'un support mobile de données, sur lequel des groupes d'unités de valeur, représentant des droits d'achats, sont, au moyen d'un appareil d'échange de données, mises en mémoire sous la forme de bits dans un champ de mémoire, et en sont extraites, les unités de valeur de chaque groupe étant valables dans un intervalle de temps déterminé,
caractérisé en ce qu'une série de positions de mémoire, qui représentent chacune un intervalle de temps à l'intérieur d'une première tranche de temps, sont chargées, ou non chargées, au choix, avec un bit par l'appareil d'échange de données, dans une première zone de mémoire du support de données, représentant une première tranche de temps,
en ce que l'instant de début et la durée d'une deuxième tranche de temps, définissable dans l'absolu, sont mis en mémoire par l'appareil d'échange de données dans une deuxième zone de mémoire du support de données, l'instant de début de la deuxième tranche de temps définissant le début de la possibilité d'appeler la première position de mémoire de la première zone de mémoire,
et en ce que le nombre d'unités de valeur qui peuvent être appelées à chaque intervalle de temps sont mises en mémoire par l'appareil d'échange de données dans une troisième zone de mémoire, servant de compteur, du support de données, le compteur étant chargé avec le nombre d'unités de valeur, qui sont représentées par un bit dans la première zone de mémoire, et le bit étant effacé dans la position de mémoire concernée dans la première zone de mémoire, s'il a été décelé comme mis préalablement en mémoire, et le compteur étant décrémenté à chaque transaction suivante de même type, si le bit est décelé comme effacé dans la position de mémoire concernée de la première zone de mémoire, et l'appareil d'échange de données produisant un signal de libération pour lire une position de mémoire prédéfinie dans la première zone de mémoire, si une comparaison de la deuxième tranche de temps avec une tranche de temps actuelle a montré qu'il y a coïncidence.

2. Procédé suivant la revendication 1, caractérisé en ce que la position dans l'espace d'une position de mémoire dans la première zone de mémoire, correspond à la position dans le temps d'un intervalle de temps dans la première tranche de temps.

3. Procédé suivant la revendication 1 ou la revendication 2, caractérisé en ce que l'appareil d'échange de données mémorise, dans une quatrième zone de mémoire du support de données, un code d'effacement et un code d'actualisation pour les première et deuxième zones de mémoire.

4. Procédé suivant l'une des revendications 1 à 3, caractérisé en ce que l'appareil d'échange de données inscrit en mémoire, dans une cinquième zone de mémoire, un montant de crédit.
